# EUROPÄISCHE PATENTANMELDUNG

(11) **EP 3 249 006 A1**
(43) Veröffentlichungstag der Anmeldung: **29.11.2017**
(21) Anmeldenummer: 17171526.1
(22) Anmeldetag: 17.05.2017
(51) Int. Cl.: C08K 5/09

(54) **KAUTSCHUK- ODER ELASTOMERZUSAMMENSETZUNGEN UND VERFAHREN ZU DEREN HERSTELLUNG**

(30) Priorität: 25.05.2016 DE 102016209098
(71) Anmelder: Leibniz-Institut für Polymerforschung Dresden e.V., 01069 Dresden (DE)
(72) Erfinder: NATARAJAN, Tamil Selvan, 01069 Dresden (DE); DAS, Amit, 01069 Dresden (DE); JURK, René, 01987 Schwarzheide (DE); LE HONG, Hai, 06110 Halle (DE); WIEßNER, Sven, 01099 Dresden (DE); STÖCKELHUBER, Klaus Werner, 09599 Freiberg (DE); HEINRICH, Gert, 30163 Hannover (DE)
(74) Vertreter: Rauschenbach, Marion

(57) **Zusammenfassung**

Die vorliegende Erfindung bezieht sich auf das Gebiet der Polymerchemie und betrifft Kautschuk- oder Elastomerzusammensetzungen, wie sie für Fahrzeugreifen eingesetzt werden können und ein Verfahren zur Herstellung dieser.

Die Aufgabe der Erfindung besteht darin, dass insbesondere der E-Modul der Zusammensetzungen in Abhängigkeit von der Temperatur und/oder den Einsatzbedingungen anpassbar ist und ein kostengünstiges und einfach realisierbares Verfahren zu deren Herstellung.

Die Aufgabe wird gelöst durch Kautschuk- oder Elastomerzusammensetzungen, die mindestens eine Kautschuk- oder Elastomermatrix und mindestens 20 bis 150 phr eines phasenwechselnden Materials in fester oder flüssiger Form enthalten.
Bei den erfindungsgemäßen Verfahren werden mindestens ein Kautschuk und mindestens 20 bis 150 phr eines phasenwechselnden Materials in fester oder flüssiger Form eingesetzt, die Zusammensetzung gemischt oder der mindestens eine Kautschuk mit dem phasenwechselnden Material mindestens in Kontakt gebracht wird, und weitere Verarbeitungsschritte durchgeführt werden können und eine Vulkanisation durchgeführt werden kann.

## Beschreibung

Die vorliegende Erfindung bezieht sich auf das Gebiet der Polymerchemie und betrifft Kautschuk- oder Elastomerzusammensetzungen, wie sie beispielsweise für intelligente Werkstoffe für Fahrzeugreifen, in der Medizin und in der Luft- und Raumfahrt, beispielsweise in intelligenten medizinischen Instrumenten, künstlichen Muskeln, Robotern, Aktuatoren, Sensoren, mikroelektromechanischen Systemen eingesetzt werden können und ein Verfahren zur Herstellung solcher Kautschuk-oder Elastomerzusammensetzungen.

Unter intelligenten Werkstoffen werden Festkörper, Flüssigkeiten und Gase verstanden, die ohne eine Regelung von außen selbständig auf verändernde Umweltbedingungen (beispielsweise einer Temperaturerhöhung, einer mechanischen Belastung, einer Änderung der pH-Wertes) reagieren (Wikipedia, Stichwort Intelligenter Werkstoff).

Allgemein sind Materialien oder Compounds bekannt, die ihre Eigenschaften beim Anlegen von unterschiedlichen Stimuli verändern können.

Beispielsweise ist ein mit synthetischen Para-Aramid-Fasern verstärkter Zement gemäß US 2011/0086941 A1 bekannt, bei dem der Zement durch die Fasern bessere mechanische Eigenschaften in Bezug auf die Elastizität erhält.

Formgebende Materialien und Strukturen, insbesondere natürliche Materialien nachahmende Materialien und Strukturen sind gemäß US 2015/0038038 bekannt, wobei ein Polymerkomposit eine Matrix, die einen Polymerfilm enthält, und einem Füllstoff, die eine elektrogesponnene Polymermatte ist, enthält.

Gemäß der CA 2472278 A1 ist die Verwendung von paraffinenthaltenden Pulvern als phasenwechselndes Material (PCM) in Polymerkompositen für Kühlelemente bekannt.

Gemäß der US 2013/0165554 A1 sind Polymernanokomposite aus einem Matrixpolymer und Nanopartikeln bekannt, bei denen eine reversible Änderung der Steifigkeit und Festigkeit als Reaktion auf einen Stimulus auftritt. Bei diesen Polymernanokompositen weist das Matrixpolymer einen vergleichsweise geringen E-Modul und geringe Festigkeit auf, und die Nanopartikel einen (zum Matrixpolymer) vergleichsweise hohen E-Modul und hohe Festigkeit. Die Partikel-Partikel-Interaktionen können durch einen Stimulus geändert werden, wodurch sich die mechanischen Eigenschaften des gesamten Materials ändern. Es können chemische oder elektrische Stimuli eingesetzt werden. Gemäß einer vorzugsweisen Ausführung wird weiterhin ein chemischer Regulator eingesetzt, um die Änderungen der mechanischen Eigenschaften zu fördern. In einer besonderen Ausführung sind als Polymernanokomposite mit Cellulosefasern angereicherte Polymere bekannt, deren mechanische Eigenschaften angepasst worden sind.

Die bekannten insbesondere elastischen Werkstoffe mit reversibler Änderung der insbesondere mechanischen Eigenschaften sind in der Regel Materialien mit hoher Festigkeit und Steifigkeit.
Es ist daher wünschenswert, einen elastischen Werkstoff, der sich je nach Temperatur an die Einsatzbedingungen anpasst und dabei eine möglichst hohe Festigkeit und Steifigkeit aufweist, anzugeben.

Elastomere sind formfeste, aber elastisch verformbare Kunststoffe, deren Glasübergangspunkt sich unterhalb der Einsatztemperatur befindet. Die Kunststoffe können sich bei Zug- und Druckbelastung elastisch verformen, finden aber danach in ihre ursprüngliche, unverformte Gestalt zurück. Elastomere finden Verwendung als Material für Reifen, Gummibänder, Dichtungsringe usw. Die bekanntesten Elastomere sind die Vulkanisate von Naturkautschuk und Silikonkautschuk (Wikipedia, Stichwort Elastomere).

Elastomerkomposite können mechanisch anpassungsfähig sein und werden dann der Klasse der stimuliresponsiven Polymere zugeordnet, bei denen die Änderung der mechanischen Eigenschaft mit Änderung des Stimulus', wie Elektrizität, Temperatur, Lösungsmittel, Ladungen beobachtbar ist (US 8 784 681 B2, WO 2014 124 293 A1).

Thermoresponsive Polymere sind Polymere, die ihre physikalischen Eigenschaften drastisch und diskontinuierlich mit der Temperatur ändern (Wikipedia, Stichwort thermoresponsive Polymere).

Nachteilig an den bekannten Lösungen ist, dass bei diesen nur die Festigkeit von spröden oder starren Materialien erhöht wird, bisher aber keine Elastomerzusammensetzungen bekannt sind, deren mechanische Eigenschaften sich in Bezug auf Festigkeit und Steifigkeit in Abhängigkeit von der Temperatur ausreichend verändern können. Ein Verfahren zur Herstellung von Elastomerzusammensetzung mit ausreichend veränderbaren mechanischen Eigenschaften in Bezug auf Festigkeit und Steifigkeit in Abhängigkeit von der Temperatur, ist bisher auch nicht bekannt.

Die Aufgabe der Erfindung besteht in der Angabe von Kautschuk- oder Elastomerzusammensetzungen, wobei insbesondere der E-Modul der Zusammensetzungen in Abhängigkeit von der Temperatur und/oder den Einsatzbedingungen anpassbar ist und ein kostengünstiges und einfach realisierbares Verfahren zu deren Herstellung.

Die Aufgabe wird durch die in den Ansprüchen angegebene Erfindung gelöst. Vorteilhafte Ausgestaltungen sind Gegenstand der Unteransprüche, wobei die Erfindung auch Kombinationen der einzelnen abhängigen Ansprüche im Sinne einer und-Verknüpfung mit einschließt, solange sie sich nicht gegenseitig ausschließen.

Die Aufgabe wird gelöst durch die Angabe von Kautschuk- oder Elastomerzusammensetzungen, die mindestens eine Kautschuk- oder Elastomermatrix und mindestens 20 bis 150 phr eines phasenwechselnden Materials in fester oder flüssiger Form enthalten, und wobei ein oder mehrere Hilfsstoffe vorliegen können.

Vorteilhafterweise weist das phasenwechselnde Material der Kautschuk- oder Elastomerzusammensetzungen eine Partikelgröße von ≤ 1 µm, noch vorteilhafterweise von 0,01 - 0,5 µm, auf.

Auch vorteilhafterweise liegt das phasenwechselnde Material der Kautschuk- oder Elastomerzusammensetzungen mit 30 bis 80 phr vor.

Weiterhin vorteilhafterweise liegt das phasenwechselnde Material der Kautschuk-oder Elastomerzusammensetzungen homogen verteilt oder in einer gradierten Verteilung in der Matrix vor.

Die Matrix der erfindungsgemäßen Kautschuk- oder Elastomerzusammensetzungen ist vorteilhafterweise aus mindestens einem Naturkautschuk und/oder mindestens einem synthetischen Kautschuk, noch vorteilhafterweise Styrol-Butadien-Kautschuk (SBR), Butadienkautschuk (BR), Butylkautschuk (IIR), ,Acrylonitril-Butadien-Kautschuk (NBR), carboxylierter NBR, hydrierter NBR, Epichlorohydrin-Ethylenoxidkautschuk (GECO), Acrylkautschuk (ACM), Ethylen-Propylen-Dien-Kautschuk (EPDM), Polyurethankautschuk (PU), Fluorkautschuk (FKM) und/oder Silikonkautschuk (VMQ), oder aus einer Mischung der Kautschuke hergestellt worden.

Als phasenwechselndes Material der Kautschuk- oder Elastomerzusammensetzungen sind vorteilhafterweise Wasser, ein oder mehrere Paraffine oder ein oder mehrere Nicht-Paraffine, ein oder mehrere anorganische Salzhydrate, ein oder mehrere eutektische Legierungen, ein oder mehrere Metalle und/oder eine oder mehrere Metallverbindungen vorhanden.

Noch vorteilhafterweise ist als Paraffin CH₃-(CH₂)ₙ-CH₃ mit n = 14 - 34 vorhanden, und sind als Nicht-Paraffin Ester, Ameisensäure, Caprylsäure, Glycerin, D-Milchsäure, Methylpalmitat, Camphenilone, Docasylbromid, Caprylon, Phenol, 1-Cyclohexylooctadecan, 9-Heptadecanon, 4-Heptadecanon, 3-Heptadecanon, 2-Heptadecanon, P-Toluidin, Cyanamid, Methyleicosanat, Hydroxyzimtsäure, Cetylalkohol, α-Napthylamin, Camphen, O-Nitroanilin, Thymol, Methylbehensäure, Diphenylamin, p-Dichlorobenzen, Oxalat, Hypophosphorische Säure, O-Xylendichlorid, Nitronaphthalen, Trimyristin, Bienenwachs, Glycolsäure, p-Bromophenol, Azobenzen, Acrylsäure, Phenylsäureazetat, Thiosinamin, Bromcampher, Durol, Benzylamin, Methylbrombenzoat, Alpha-Napthol, Glutarsäure, P-Xylendichlorid, Catechinsäure, Chinon, Acetanilid, Bernsteinanhydrid, Benzoesäure, Stilben, Benzamid, und/oder Fettsäuren vorhanden, noch vorteilhafterweise Caprylsäure, Elaidinsäure, Laurinsäure, Pentadecansäure, Heptadecansäure, Tristearin, Myristinsäure, Palmitinsäure, Stearinsäure, Acetamid und/oder deren Salze, noch vorteilhafterweise Zinkstearat, Glycerylstearat, Methylfumarat, Kaliumlaureat und/oder Glyceryllaureat vorhanden.

Weiter vorteilhafterweise ist als Hilfsstoff der erfindungsgemäßen Kautschuk- oder Elastomerzusammensetzungen mindestens ein Füllstoff, mindestens ein Vulkanisationsmittel, mindestens ein Aushärtungsmittel, mindestens ein Vernetzungsmittel, mindestens ein Beschleuniger und/oder mindestens ein Aktivator, noch vorteilhafterweise Schwefel, Peroxid und/oder Zinkoxid (ZnO), vorhanden.

Besonders vorteilhafterweise liegt als Füllstoff der Kautschuk- oder Elastomerzusammensetzungen verstärkender Füllstoff, noch vorteilhafterweise Ruß, Calciumcarbonat, Schichtsilikat, Kohlenstoff-Nanoröhrchen, Hydrotalcit, Graphen, Silica, und/oder nicht-verstärkender Füllstoff, noch vorteilhafterweise Lehm/Tonerde, Calciumcarbonat, Talkum, und/oder Antioxidationsmittel, noch vorteilhafterweise Trimethylchinolon (TQ), vor.

Vorteilhafterweise ist das phasenwechselnde Material der Kautschuk- oder Elastomerzusammensetzungen polar oder sind die Elastomermatrix und das phasenwechselnde Material der Kautschuk- oder Elastomerzusammensetzungen polar.

Die Aufgabe der Erfindung wird weiter gelöst durch die Angabe eines Verfahrens zur Herstellung von Kautschukzusammensetzungen, wobei mindestens ein Kautschuk und mindestens 20 bis 150 phr eines phasenwechselnden Materials in fester oder flüssiger Form eingesetzt werden, wobei ein oder mehrere Hilfsstoffe eingesetzt werden können, die Zusammensetzung gemischt oder der mindestens eine Kautschuk mit oder ohne Hilfsstoffen mit dem phasenwechselnden Material mindestens in Kontakt gebracht wird, und weitere Verarbeitungsschritte durchgeführt werden können.

Auch wird die Aufgabe der Erfindung gelöst durch die Angabe eines Verfahrens zur Herstellung von Elastomerzusammensetzungen, wobei mindestens ein Kautschuk und mindestens 20 bis 150 phr eines phasenwechselnden Materials in fester oder flüssiger Form eingesetzt wird, wobei ein oder mehrere Hilfsstoffe eingesetzt werden können, und weitere Verarbeitungsschritte durchgeführt werden können, und entweder das phasenwechselnde Material mit dem mindestens einen Kautschuk gemischt und anschließend vulkanisiert wird, oder der mindestens eine Kautschuk mit oder ohne einem oder mehreren Hilfsstoffen gemischt und ohne oder nach Durchführung weiterer Verarbeitungsschritte vulkanisiert und nachfolgend mit dem phasenwechselnden Material mindestens kontaktiert wird.

Vorteilhafterweise wird die gemischte Zusammensetzung in einem weiteren Verfahrensschritt gewalzt.

Auch vorteilhafterweise wird phasenwechselndes Material mit einer Partikelgröße von ≤ 1 µm, noch vorteilhafterweise von 0,01 - 0,5 µm, eingesetzt.

Ebenfalls vorteilhafterweise wird 30 bis 80 phr phasenwechselndes Material eingesetzt.

Das phasenwechselnde Material wird vorteilhafterweise homogen oder gradiert in der Matrix verteilt.

Die Matrix der erfindungsgemäßen Kautschuk- oder Elastomerzusammensetzungen wird vorteilhafterweise aus mindestens einem Naturkautschuk und/oder mindestens einem synthetischen Kautschuk, noch vorteilhafterweise Styrol-Butadien-Kautschuk (SBR), Butadienkautschuk (BR), Butylkautschuk (IIR), Acrylonitril-Butadien-Kautschuk (NBR), carboxylierter NBR, hydrierter NBR, Epichlorohydrin-Ethylenoxidkautschuk (GECO), Acrylkautschuk (ACM), Ethylen-Propylen-Dien-Kautschuk (EPDM), Polyurethankautschuk (PU), Fluorkautschuk (FKM) und/oder Silikonkautschuk (VMQ), oder aus einer Mischung der Kautschuke hergestellt.

Als phasenwechselndes Material der erfindungsgemäßen Kautschuk- oder Elastomerzusammensetzungen werden vorteilhafterweise Wasser, ein oder mehrere Paraffine oder Nicht-Paraffine, ein oder mehrere anorganische Salzhydrate, ein oder mehrere eutektische Legierungen, ein oder mehrere Metalle und/oder eine oder mehrere Metallverbindungen eingesetzt.

Weiter wird vorteilhafterweise als Paraffin CH₃-(CH₂)ₙ-CH₃ mit n = 14 - 34 eingesetzt und/oder werden vorteilhafterweise als Nicht-Paraffin Ester Ameisensäure, Caprylsäure, Glycerin, D-Milchsäure, Methylpalmitat, Camphenilon, Docasylbromid, Caprylon, Phenol, 1-Cyclohexylooctadecan, 9-Heptadecanon, 4-Heptadecanon, 3-Heptadecanon, 2-Heptadecanon, P-Toluidin, Cyanamid, Methyleicosanat, Hydroxyzimtsäure, Cetylalkohol, α-Napthylamin, Camphen, O-Nitroanilin, Thymol, Methylbehensäure, Diphenylamin, p-Dichlorobenzen, Oxalat, Hypophosphorische Säure, O-Xylendichlorid, Nitronaphthalen, Trimyristin, Bienenwachs, Glycolsäure, p-Bromophenol, Azobenzen, Acrylsäure, Phenylsäureazetat, Thiosinamin, Bromcampher, Durol, Benzylamin, Methylbrombenzoat, Alpha-Napthol, Glutarsäure, P-Xylendichlorid, Catechinsäure, Chinon, Acetanilid, Bernsteinanhydrid, Benzoesäure, Stilben, Benzamid, und/oder Fettsäuren eingesetzt, noch vorteilhafterweise Caprylsäure, Elaidinsäure, Laurinsäure, Pentadecansäure, Heptadecansäure, Tristearin, Myristinsäure, Palmitinsäure, Stearinsäure, Acetamid und/oder deren Salze, noch vorteilhafterweise Zinkstearat, Glycerylstearat, Methylfumarat, Kaliumlaureat und/oder Glyceryllaureat eingesetzt.

Als Hilfsstoffe werden vorteilhafterweise mindestens ein Füllstoff, mindestens ein Vulkanisationsmittel, mindestens ein Aushärtungsmittel, mindestens ein Vernetzungsmittel, mindestens ein Beschleuniger und/oder mindestens ein Aktivator, noch vorteilhafterweise Schwefel, Peroxid und/oder Zinkoxid (ZnO), zugegeben.

Als Füllstoff wird vorteilhafterweise verstärkender Füllstoff, noch vorteilhafterweise Ruß, Calciumcarbonat, Schichtsilikat, Kohlenstoff-Nanoröhrchen, Hydrotalcit, Graphen, Silica, und/oder nicht-verstärkender Füllstoff, noch vorteilhafterweise Lehm/Tonerde, Calciumcarbonat, Talkum, und/oder Antioxidationsmittel, noch vorteilhafterweise Trimethylchinolon (TQ), zugegeben.

Als phasenwechselndes Material wird vorteilhafterweise ein polares phasenwechselndes Material eingesetzt oder werden vorteilhafterweise ein polarer Kautschuk und ein polares phasenwechselndes Material eingesetzt.

Mit der vorliegenden Erfindung ist es erstmals möglich, Kautschuk- oder Elastomerzusammensetzungen anzugeben, bei denen insbesondere der E-Modul in Abhängigkeit von der Temperatur und den Einsatzbedingungen anpassbar ist, und ein Verfahren zur Herstellung solcher Kautschuk- oder Elastomerzusammensetzungen anzugeben, das in einfacher Art und Weise durchzuführen ist und kostengünstig ist.

Erreicht wird dies insbesondere durch den Einsatz eines phasenwechselnden Materials in fester oder flüssiger Form, welches in der Kautschuk- oder Elastomermatrix vorliegt und beim Auftreten eines Stimulus' seine Phasen wechselt und dadurch Einfluss auf das gesamte Material ausübt.
Bei den erfindungsgemäßen Kautschuk- oder Elastomerzusammensetzungen können durch einen Stimulus, wie beispielsweise eine Temperaturänderung oder die Einsatzbedingungen, über die Einstellung des E-Moduls beispielsweise die Konfiguration oder Dimension der physikalischen (mechanisch, tribologisch) Eigenschaften geändert werden. Durch Einflussnahme auf die Stimuli kann auch der Prozess des Phasenwechsels und/oder seiner Auswirkungen auf die Änderungen an und/oder im Material gesteuert werden.

Als mechanische Eigenschaften sollen im Rahmen dieser Erfindung insbesondere die Festigkeit, speziell Zugfestigkeit und Druckfestigkeit, die Steifigkeit, die Elastizität, die Plastizität (Duktilität), die Kriechzähigkeit, die Härte, die Dauerfestigkeit, die Dichte, die Risszähigkeit und die Werkstoffdämpfung verstanden werden, die durch Änderungen der Kautschuk- oder Elastomerzusammensetzungen über die Anpassung des E-Moduls angepasst und in gewünschter Richtung verändert werden können.

Die erfindungsgemäßen Kautschuk- oder Elastomerzusammensetzungen sind intelligente Werkstoffe, die Festkörper oder Festkörper mit Flüssigkeiten sind, die selbständig auf Stimuli, insbesondere verändernde Temperaturbedingungen, reagieren.

Das phasenwechselnde Material liegt, insbesondere in Abhängigkeit von der Temperatur, in fester oder flüssiger Form vor.
Für die erfindungsgemäßen Zusammensetzungen ist es vorteilhaft, wenn das phasenwechselnde Material in fester Form eingesetzt wird, und dann eine Partikelgröße im Mikrometerbereich, wie ≤ 1 µm, vorteilhafterweise im Submikrometerbereich, wie 0,01 - 0,5 µm, aufweist.
Im Falle des Einsatzes von Wasser als phasenwechselndes Material wird dies vorteilhafterweise als Flüssigkeit der erfindungsgemäßen Kautschuk- oder Elastomerzusammensetzung zugegeben oder mindestens damit in Kontakt gebracht. Bei Temperaturabsenkung erfolgt dann der Phasenwechsel zu Eiskristallen.

Erfindungsgemäß können sowohl Kautschukzusammensetzungen als auch Elastomerzusammensetzungen, unter denen in Rahmen dieser Erfindung vulkanisierte Kautschukzusammensetzungen gemeint sind, mit dem phasenwechselnden Material hergestellt werden und dieses nach Fertigstellung der Zusammensetzungen aufweisen.

Hergestellt werden die erfindungsgemäßen Kautschuk- oder Elastomerzusammensetzungen, indem ein oder mehrere Kautschuke mit mindestens 20 bis 150 phr eines phasenwechselnden Materials in fester oder flüssiger Form eingesetzt werden und ein oder mehrere Hilfsstoffe zugegeben werden können. Das phasenwechselnde Material kann mit dem einen oder mehreren Kautschuken und mit oder ohne Hilfsstoffe gemischt werden oder der mindestens eine Kautschuk kann mit oder ohne Hilfsstoffen mit dem phasenwechselnden Material mindestens in Kontakt gebracht werden. Vor oder nach der Zugabe oder dem in Kontakt bringen des oder der Kautschuke mit dem phasenwechselnden Material können weitere Verarbeitungsschritte durchgeführt werden.
Sofern das Verfahren an dieser Stelle abgeschlossen wird, liegt eine erfindungsgemäße Kautschukzusammensetzung vor.
Wenn die so hergestellte Kautschukzusammensetzung vulkanisiert wird, liegt dann eine erfindungsgemäße Elastomerzusammensetzung vor.
Die erfindungsgemäße Elastomerzusammensetzung kann aber auch hergestellt werden, indem eine Kautschukzusammensetzung ohne phasenwechselndes Material hergestellt wird, mit oder ohne Hilfsstoffe und/oder mit oder ohne weitere Verarbeitungsschritte, und Vulkanisation dieser Zusammensetzung und erst nachfolgende Mischung und/oder mindestens in Kontakt-Bringung dieser vulkanisierten Zusammensetzung mit dem phasenwechselnden Material.
Im letztgenannten Falle ist es vorteilhafter, wenn das phasenwechselnde Material in flüssiger Form eingebracht oder in Kontakt gebracht wird, beispielsweise, wenn ein Elastomer in Wasser oder in flüssiges Wachs getaucht wird.

Die erfindungsgemäßen Kautschuk- oder Elastomerzusammensetzungen weisen dabei mindestens ein phasenwechselndes Material auf, das den E-Modul und damit die mechanischen Eigenschaften, insbesondere Festigkeit und Steifigkeit, der Zusammensetzung in Abhängigkeit von beispielsweise Temperaturänderungen und/oder Einsatzbedingungen beeinflusst, wobei die Temperaturänderungen vorteilhafterweise unterhalb der Siede- und/oder Schmelztemperatur mindestens des phasenwechselnden Materials stattfinden.

Vorteilhafterweise kann auch ein phasenwechselndes Material bis oberhalb seiner Schmelztemperatur eingesetzt werden und kann dann in den erfindungsgemäßen Zusammensetzungen mechanischen Eigenschaften insbesondere in Bezug auf eine erhöhte Plastizität und/oder erhöhte Werkstoffdämpfung beeinflussen und kann auch als Weichmacher/Plastifikator dienen.

Die Änderungen durch den Phasenwechsel sind bei den erfindungsgemäßen Zusammensetzungen vorteilhafterweise auch reversibel.

In der gummi-chemischen Industrie werden die Massenanteile der einzelnen Mischungsbestandteile einer Elastomermischung in der Einheit "phr" (parts per hundred rubber) angegeben, wobei diese Angaben jeweils auf 100 Masseteile des Grundpolymers bezogen sind (Wikipedia, Stichwort phr).
Gemäß der vorliegenden Erfindung beziehen sich die Masseteile somit auf die Kautschuk- oder Elastomermatrix.

Das phasenwechselnde Material liegt in den erfindungsgemäßen Zusammensetzungen in einem Anteil von 20 bis 150 phr, vorteilhafterweise 30 bis 80 phr, vor.

Weiter liegt das phasenwechselnde Material eingebettet in der Kautschuk- oder Elastomermatrix vor.
Gemäß der Definition einer Matrix in einem Verbundwerkstoff sind dort Teilchen oder Fasern in die andere Komponente des Verbundwerkstoffes, die sogenannte Matrix, eingebettet (Wikipedia, Stichwort Verbundwerkstoff).

Vorteilhafterweise liegt das phasenwechselnde Material in der Kautschuk- oder Elastomermatrix homogen verteilt vor. Je nach Anwendungsfall kann aber auch eine gradierte Verteilung des phasenwechselnden Materials in der Matrix vorteilhaft sein. Die Kautschuk- oder Elastomermatrix und das phasenwechselnde Material weisen keine netzwerkartige Struktur auf.

Intelligente Werkstoffe, wie die erfindungsgemäßen Zusammensetzungen, sind als Gummimischung vor der Vulkanisation oder auch nach der Vulkanisation als Reifen für die Fahrzeugindustrie oder in intelligenten medizinischen Instrumenten, künstlichen Muskeln, Robotern, Aktuatoren, Sensoren oder mikroelektromechanischen Systemen einsetzbar.

Besonders vorteilhaft ist es, wenn die erfindungsgemäßen Kautschuk- oder Elastomerzusammensetzungen ihre mechanischen Eigenschaften thermoresponsiv ändern und so die Materialeigenschaften insbesondere den Umgebungstemperaturen anpassen können.

Als Grad der mechanischen Anpassungsfähigkeit/Adaptivität wird erfindungsgemäß die Anpassung der Eigenschaften an die Einsatzbedingungen betrachtet. Dabei werden mechanische Eigenschaften der Kautschuk- oder Elastomerzusammensetzung mit und ohne phasenwechselndem Material im Verhältnis zueinander betrachtet. Der Grad der mechanischen Anpassungsfähigkeit kann dabei beispielsweise ein Vielfaches des E-Moduls einer erfindungsgemäßen Kautschuk- oder Elastomerzusammensetzung mit phasenwechselndem Material sein im Verhältnis zum E-Modul der gleichen Elastomerzusammensetzung ohne phasenwechselndes Material.

Besonders vorteilhaft ist es weiter, wenn bei den erfindungsgemäßen Zusammensetzungen die Polarität des jeweiligen Materials berücksichtigt wird. Die Polarität kann eine entscheidende Rolle spielen, um eine bezüglich der Komponenten kompatible und stabile Mischung zu erreichen.
Vorteilhafterweise ist das phasenwechselnde Material polar. Auch vorteilhafterweise sind sowohl der Kautschuk als auch das phasenwechselnde Material polar.

Eine weitere vorteilhafte Eigenschaft der erfindungsgemäßen Elastomerzusammensetzungen ist deren Einsatzmöglichkeit als Fahrzeugreifen, so dass sich die Eigenschaften des Reifenmaterials an die Umgebungstemperatur anpassen und somit je nach mehr Temperatur ein besserer Grip/bessere Traktion auf dem Untergrund vorhanden ist.

Nachfolgend wird die Erfindung an mehreren Ausführungsbeispielen näher erläutert.

### Beispiel 1 (Herstellung einer Kautschukzusammensetzung)

100 phr carboxylierter NBR (XNBR, carboxylierter Acrylnitrilbutadien-Kautschuk) wird als Kautschuk mit 5 phr ZnO als Aushärtungsmittel gemischt und 40 phr Zinkstearat als phasenwechselndes Material zugegeben. Zinkstearat schmilzt bei 120 °C-130 °C.

Die Mischung wird in einem weiteren Verarbeitungsschritt in einer Doppelwalze für 20 min gewalzt und nachfolgend zu Folien verarbeitet.

Die so hergestellte Kautschukzusammensetzung weist bis zu einer Temperatur von 120 °C ein E-Modul von 30 MPa.

Bei einer Temperatur oberhalb 120 °C schmilzt das Zinkstearat in der Elastomerzusammensetzung. Der E-Modul der Elastomerzusammensetzung bei 140 °C beträgt nun 3 MPa.

Der E-Modul der so hergestellten Kautschukzusammensetzung hat sich um den Faktor 10 gegenüber der bekannten Kautschukzusammensetzung verbessert. Der Grad der mechanischen Anpassungsfähigkeit ist nahezu 10.

### Beispiel 2 (Herstellung einer Elastomerzusammensetzung mit phasenwechselndem Material vor der Vulkanisation)

100 phr Epichlorhydrinterpolymer-Kautschuk wird mit 5 phr MTT (3-Methylthiazolidon-2-thion) als Vulkanisationsmittel und 5 phr ZnO und 5 phr Stearinsäure als Aktivator und 1.5 phr Schwefel als Beschleuniger gemischt und 40 phr Ameisensäure als phasenwechselndes Material zugegeben. Ameisensäure liegt in flüssiger Form vor. Der Phasenwechsel von Ameisensäure erfolgt bei einer Temperatur von 8 °C.

Die Ausgangsstoffe werden gemischt und nachfolgend wird die Mischung in einer Doppelwalze für 10 min gewalzt und nachfolgend zu Folien verarbeitet und bei 160 °C vulkanisiert.

Die so hergestellte Elastomerzusammensetzung weist bei 0 °C eine Festigkeit von 20 MPa auf.

Bei 10 °C weist die Elastomerzusammensetzung einen erhöhten E-Modul der Elastomerzusammensetzung von 2 MPa auf.

Der E-Modul der so hergestellten Kautschukzusammensetzung hat sich um den Faktor 10 gegenüber der bekannten Kautschukzusammensetzung verbessert. Der Grad der mechanischen Anpassungsfähigkeit ist nahezu 10.

### Beispiel 3 (Herstellung einer Elastomerzusammensetzung mit phasenwechselndem Material nach der Vulkanisation)

100 phr Epichlorhydrinterpolymer-Kautschuk wird mit 5 phr MTT (3-Methylthiazolidon-2-thion) als Vulkanisationsmittel und 5 phr ZnO und 5 phr Stearinsäure als Aktivator und 5 phr Mercaptobenzothiazol als Beschleuniger gemischt und nachfolgend wird die Mischung in einer Doppelwalze für 8 min gewalzt und nachfolgend zu Folien verarbeitet und bei 160 °C vulkanisiert.
Die so hergestellte Elastomerzusammensetzung weist bei 20 °C einen E-Modul von 2 MPa auf.

Nachfolgend wird die Elastomermischung 4 Tage in destilliertem Wasser bei 20 °C vollständig eingetaucht.

Danach weist die Elastomerzusammensetzung einen erhöhten E-Modul von 10 MPa bei einer Temperatur von -5 °C auf.

Das Material weist einen E-Modul von 1 MPa bei +5 °C auf.
Der E-Modul der so hergestellten Kautschukzusammensetzung hat sich um den Faktor 10 gegenüber der bekannten Kautschukzusammensetzung verbessert. Der Grad der mechanischen Anpassungsfähigkeit ist nahezu 10.

## Patentansprüche

1. Kautschuk- oder Elastomerzusammensetzungen, enthaltend mindestens eine Kautschuk- oder Elastomermatrix und mindestens 20 bis 150 phr eines phasenwechselnden Materials in fester oder flüssiger Form, wobei das phasenwechselnde Material eine Partikelgröße von ≤ 1 µm aufweist, und wobei ein oder mehrere Hilfsstoffe vorliegen können.

2. Kautschuk- oder Elastomerzusammensetzungen nach Anspruch 1, wobei das phasenwechselnde Material eine Partikelgröße von 0,01 - 0,5 µm aufweist.

3. Kautschuk- oder Elastomerzusammensetzungen nach Anspruch 1, wobei das phasenwechselnde Material mit 30 bis 80 phr vorliegt.

4. Kautschuk- oder Elastomerzusammensetzungen nach Anspruch 1, wobei das phasenwechselnde Material homogen verteilt oder in einer gradierten Verteilung in der Matrix vorliegt.

5. Kautschuk- oder Elastomerzusammensetzungen nach Anspruch 1, wobei die Matrix aus mindestens einem Naturkautschuk und/oder mindestens einem synthetischen Kautschuk, vorteilhafterweise Styrol-Butadien-Kautschuk (SBR), Butadienkautschuk (BR), Butylkautschuk (IIR), ,Acrylonitril-Butadien-Kautschuk (NBR), carboxylierter NBR, hydrierter NBR, Epichlorohydrin-Ethylenoxidkautschuk (GECO), Acrylkautschuk (ACM), Ethylen-Propylen-Dien-Kautschuk (EPDM), Polyurethankautschuk (PU), Fluorkautschuk (FKM) und/oder Silikonkautschuk (VMQ), oder aus einer Mischung der Kautschuke hergestellt worden ist.

6. Kautschuk- oder Elastomerzusammensetzungen nach Anspruch 1, wobei als phasenwechselndes Material Wasser, ein oder mehrere Nicht-Paraffine, ein oder mehrere anorganische Salzhydrate, ein oder mehrere eutektische Legierungen, ein oder mehrere Metalle und/oder eine oder mehrere Metallverbindungen vorhanden sind, wobei vorteilhafterweise als Nicht-Paraffin Ester, Ameisensäure, Caprylsäure, Glycerin, D-Milchsäure, Methylpalmitat, Camphenilone, Docasylbromid, Caprylon, Phenol, 1-Cyclohexylooctadecan, 9-Heptadecanon, 4-Heptadecanon, 3-Heptadecanon, 2-Heptadecanon, P-Toluidin, Cyanamid, Methyleicosanat, Hydroxyzimtsäure, Cetylalkohol, α-Napthylamin, Camphen, O-Nitroanilin, Thymol, Methylbehensäure, Diphenylamin, p-Dichlorobenzen, Oxalat, Hypophosphorische Säure, O-Xylendichlorid, Nitronaphthalen, Trimyristin, Bienenwachs, Glycolsäure, p-Bromophenol, Azobenzen, Acrylsäure, Phenylsäureazetat, Thiosinamin, Bromcampher, Durol, Benzylamin, Methylbrombenzoat, Alpha-Napthol, Glutarsäure, P-Xylendichlorid, Catechinsäure, Chinon, Acetanilid, Bernsteinanhydrid, Benzoesäure, Stilben, Benzamid, und/oder Fettsäuren vorhanden sind, noch vorteilhafterweise Caprylsäure, Elaidinsäure, Laurinsäure, Pentadecansäure, Heptadecansäure, Tristearin, Myristinsäure, Palmitinsäure, Stearinsäure, Acetamid und/oder deren Salze, noch vorteilhafterweise Zinkstearat, Glycerylstearat, Methylfumarat, Kaliumlaureat und/oder Glyceryllaureat vorhanden sind.

7. Kautschuk- oder Elastomerzusammensetzungen nach Anspruch 1, wobei als Hilfsstoff mindestens ein Füllstoff, mindestens ein Vulkanisationsmittel, mindestens ein Aushärtungsmittel, mindestens ein Vernetzungsmittel, mindestens ein Beschleuniger und/oder mindestens ein Aktivator, vorteilhafterweise Schwefel, Peroxid und/oder Zinkoxid (ZnO), vorhanden ist, wobei vorteilhafterweise als Füllstoff verstärkender Füllstoff, noch vorteilhafterweise Ruß, Calciumcarbonat, Schichtsilikat, Kohlenstoff-Nanoröhrchen, Hydrotalcit, Graphen, Silica, und/oder nicht-verstärkender Füllstoff, noch vorteilhafterweise Lehm/Tonerde, Calciumcarbonat, Talkum, und/oder Antioxidationsmittel, noch vorteilhafterweise Trimethylchinolon (TQ), vorliegt.

8. Kautschuk- oder Elastomerzusammensetzungen nach Anspruch 1, wobei das phasenwechselnde Material polar ist oder die Elastomermatrix und das phasenwechselnde Material polar sind.

9. Verfahren zur Herstellung von Kautschukzusammensetzungen, wobei mindestens ein Kautschuk und mindestens 20 bis 150 phr eines phasenwechselnden Materials in fester oder flüssiger Form eingesetzt werden, wobei phasenwechselndes Material mit einer Partikelgröße von ≤ 1 µm eingesetzt wird, wobei ein oder mehrere Hilfsstoffe eingesetzt werden können, die Zusammensetzung gemischt oder der mindestens eine Kautschuk mit oder ohne Hilfsstoffen mit dem phasenwechselnden Material mindestens in Kontakt gebracht wird, und weitere Verarbeitungsschritte durchgeführt werden können.

10. Verfahren zur Herstellung von Elastomerzusammensetzungen, wobei mindestens ein Kautschuk und mindestens 20 bis 150 phr eines phasenwechselnden Materials in fester oder flüssiger Form eingesetzt werden, wobei phasenwechselndes Material mit einer Partikelgröße von ≤ 1 µm eingesetzt wird, wobei ein oder mehrere Hilfsstoffe eingesetzt werden können, und weitere Verarbeitungsschritte durchgeführt werden können, und entweder das phasenwechselnde Material mit dem mindestens einen Kautschuk gemischt und anschließend vulkanisiert wird, oder der mindestens eine Kautschuk mit oder ohne einem oder mehreren Hilfsstoffen gemischt und ohne oder nach Durchführung weiterer Verarbeitungsschritte vulkanisiert und nachfolgend mit dem phasenwechselnden Material mindestens kontaktiert wird.

11. Verfahren nach Anspruch 9 oder 10, bei dem die gemischte Zusammensetzung in einem weiteren Verfahrensschritt gewalzt wird.

12. Verfahren nach Anspruch 9 oder 10, wobei phasenwechselndes Material mit einer Partikelgröße von 0,01 - 0,5 µm und/oder 30 bis 80 phr phasenwechselndes Material eingesetzt wird, wobei auch vorteilhafterweise das phasenwechselnde Material homogen oder gradiert in der Matrix verteilt wird.

13. Verfahren nach Anspruch 9 oder 10, wobei die Matrix aus mindestens einem Naturkautschuk und/oder mindestens einem synthetischen Kautschuk, vorteilhafterweise Styrol-Butadien-Kautschuk (SBR), Butadienkautschuk (BR), Butylkautschuk (IIR), Acrylonitril-Butadien-Kautschuk (NBR), carboxylierter NBR, hydrierter NBR, Epichlorohydrin-Ethylenoxidkautschuk (GECO), Acrylkautschuk (ACM), Ethylen-Propylen-Dien-Kautschuk (EPDM), Polyurethankautschuk (PU), Fluorkautschuk (FKM) und/oder Silikonkautschuk (VMQ), oder aus einer Mischung der Kautschuke hergestellt wird.

14. Verfahren nach Anspruch 9 oder 10, wobei als phasenwechselndes Material Wasser, Nicht-Paraffine, ein oder mehrere anorganische Salzhydrate, ein oder mehrere eutektische Legierungen, ein oder mehrere Metalle und/oder eine oder mehrere Metallverbindungen eingesetzt werden, wobei vorteilhafterweise als Nicht-Paraffin Ester Ameisensäure, Caprylsäure, Glycerin, D-Milchsäure, Methylpalmitat, Camphenilon, Docasylbromid, Caprylon, Phenol, 1-Cyclohexylooctadecan, 9-Heptadecanon, 4-Heptadecanon, 3-Heptadecanon, 2-Heptadecanon, P-Toluidin, Cyanamid, Methyleicosanat, Hydroxyzimtsäure, Cetylalkohol, α-Napthylamin, Camphen, O-Nitroanilin, Thymol, Methylbehensäure, Diphenylamin, p-Dichlorobenzen, Oxalat, Hypophosphorische Säure, O-Xylendichlorid, Nitronaphthalen, Trimyristin, Bienenwachs, Glycolsäure, p-Bromophenol, Azobenzen, Acrylsäure, Phenylsäureazetat, Thiosinamin, Bromcampher, Durol, Benzylamin, Methylbrombenzoat, Alpha-Napthol, Glutarsäure, P-Xylendichlorid, Catechinsäure, Chinon, Acetanilid, Bernsteinanhydrid, Benzoesäure, Stilben, Benzamid, und/oder Fettsäuren eingesetzt werden, noch vorteilhafterweise Caprylsäure, Elaidinsäure, Laurinsäure, Pentadecansäure, Heptadecansäure, Tristearin, Myristinsäure, Palmitinsäure, Stearinsäure, Acetamid und/oder deren Salze, noch vorteilhafterweise Zinkstearat, Glycerylstearat, Methylfumarat, Kaliumlaureat und/oder Glyceryllaureat eingesetzt werden.

15. Verfahren nach Anspruch 9 oder 10, wobei als Hilfsstoffe mindestens ein Füllstoff, mindestens ein Vulkanisationsmittel, mindestens ein Aushärtungsmittel, mindestens ein Vernetzungsmittel, mindestens ein Beschleuniger und/oder mindestens ein Aktivator, vorteilhafterweise Schwefel, Peroxid und/oder Zinkoxid (ZnO), zugegeben werden, wobei vorteilhafterweise als Füllstoff, verstärkender Füllstoff, noch vorteilhafterweise Ruß, Calciumcarbonat, Schichtsilikat, Kohlenstoff-Nanoröhrchen, Hydrotalcit, Graphen, Silica, und/oder nicht-verstärkender Füllstoff, noch vorteilhafterweise Lehm/Tonerde, Calciumcarbonat, Talkum, und/oder Antioxidationsmittel, noch vorteilhafterweise Trimethylchinolon (TQ), zugegeben wird.

16. Verfahren nach Anspruch 9 oder 10, wobei als phasenwechselndes Material ein polares phasenwechselndes Material eingesetzt wird oder ein polarer Kautschuk und ein polares phasenwechselndes Material eingesetzt werden.
